(19) Europäisches Patentamt
European Patent Office
Office européen des brevets

(11) Publication number: 0 382 167 A1

(12) EUROPEAN PATENT APPLICATION

(21) Application number: 90102317.6

(22) Date of filing: 06.02.90

(51) Int. Cl.5: C08L 33/24, C08L 25/02, //(C08L33/24,25:02)

(30) Priority: 07.02.89 IT 1934089

(43) Date of publication of application: 16.08.90 Bulletin 90/33

(84) Designated Contracting States: BE DE ES FR GB NL

(71) Applicant: MONTEDIPE S.r.l.
31, Foro Buonaparte
I-20121 Milan(IT)

(72) Inventor: Canova, Luciano Dr.
7, via Marsala
I-28100 Novara(IT)
Inventor: Giannotta, Giorgio, Chem. Eng.
21, via Pola
I-20124 Milan(IT)
Inventor: Albizzati, Enrico, Dr.
64, via Roma
I-28041 Arona, Novara(IT)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
D-8000 München 40(DE)

(54) **Compatible mixtures of N-aryl polyglutarimides with styrene copolymers.**

(57) Described are compatible mixtures of certain styrene copolymers with polyglutarimides which have been prepared by imidization of poly(meth)acrylates and/or poly(meth)acrylic acid with amides of formula

X-Z-NHR

wherein

X = H, hydrocarbyl or, when Z = $>$CO, additionally -NHR or -Y-CO-NHR;

R = aryl;

Z = $>$CO, $>SO_2$, $-C_6H_4-SO_2-$.

EP 0 382 167 A1

## COMPATIBLE MIXTURES OF N-ARYL POLYGLUTARIMIDES WITH STYRENE COPOLYMERS

The present invention relates to compatible mixtures of imidized acrylic polymers (polyglutarimides) with at least one styrene polymer of the type SAN, AES and ABS.

More particularly the present invention relates to compatible mixtures of N-aryl polyglutarimides with said styrene copolymers.

Polyglutarimides are known for a long time. They are generally prepared by reacting, in various ways, acrylic polymers such as, for example, polyacrylic or polymethacrylic acid, polyalkylacrylates or -methacrylates, or copolymers of such acrylic monomers with small amounts of copolymerizable monomers, amines or compounds capable of giving rise to amines in the course of the reaction, such as urea and substituted ureas, or also with compounds such as amides and ammonium salts.

US-A-4,246,374 describes polyglutarimides with improved properties as compared to the already known polyglutarimides and prepared by reaction of acrylic polymers of the above type with aliphatic, cycloaliphatic or aromatic amines in the absence of solvents in an extruder and under particular conditions.

The polyglutarimides, including the ones of US-A-4,246,374, exhibit a good thermal stability, a high tensile strength, a high elastic modulus and a satisfactory solvent resistance. They are, however, brittle and exhibit a low impact strength.

It is known that the impact strength of polyglutarimides can be increased by addition thereto of conventional impact resistant modifiers, for example ABS copolymers.

US-A-4,436,871 describes compatible or partially compatible mixtures (called soluble or partially soluble mixtures) comprising from 1 to 99 parts by weight of a polyglutarimide and from 99 to 1 parts by weight of styreneacrylonitrile copolymers.

The term "compatible" or "soluble", whenever used herein, is meant to characterize systems in which only one Tg value (glass transition temperature), measured by DSC, is observed in the region between the Tg values of the styrene copolymer glass phase and the Tg values of the polyglutarimide. Conversely, when two Tg values are present, and the initial Tg value of one component or of both components is considerably shifted towards the Tg value of the other component, there is only a partial solubility between the two components.

As a consequence of the partial solubility, the mechanical properties of the polyglutarimides can only partially be improved.

With mixtures of polyglutarimides and copolymers of styrene with acrylonitrile (SAN) - as evidenced in particular by the type of compositions described in US-A-4,436,871 - there is a general tendency towards insolubility (or incompatibility) between the components as the Tg value, or degree of imidization of the imidized polymer, increase.

Said tendency is observed for both the non-substituted polyglutarimides and the N-alkyl-substituted polyglutarimides, independent of the preparation thereof, as well as for all those polyglutarimides employed in the compositions of US-A-4,436,871, including the N-aryl-substituted polyglutarimides prepared by the reaction of acrylic polymers with amines in accordance with the process of US-A-4,246,374.

For example, in the case of the N-phenyl-substituted polyglutarimides prepared from acrylic polymers and aniline, a lack of compatibility with the styrene copolymers of the SAN type is observed already at Tg values of the polyglutarimides of 135 °C.

Therefore, on the basis of what was known so far from the literature about mixtures of SAN copolymers with N-aryl-substituted polyglutarimides, it seemed impossible to be able to obtain compatible mixtures by using N-arly-substittuted polyglutarimides with progressively higher Tg values.

It has now, surprisingly, been found that the N-aryl-substituted polyglutarimides, obtained by reacting acrylic homo-or copolymers with N-aryl-substituted amides, show, towards the styrene copolymers of the SAN type, a behaviour remarkably different from the one of all the other polyglutarimides in particular of the N-aryl-substituted polyglutarimides prepared in a different manner, exhibiting a complete miscibility or compatibility with such copolymers also at Tg values which correspond to the maximum imidization degree of the acrylic polymer.

The N-aryl-substituted amides utilizable for preparing the polyglutarimides suitable for achieving the objects of the invention are of the general formula: X-Z-NHR (I)

where:

R = an aryl radical of formula:

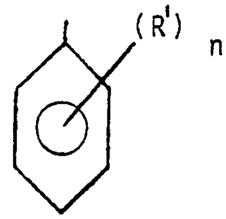

in which
R′ = halogen (e.g. Cl, Br or F), hydroxy, carboxy, or alkyl containing 1-4 carbon atoms (e.g. methyl or ethyl);
n = an integer from 0 to 3, extremes included;
Z = >C = O, >$SO_2$, -$C_6H_4$-$SO_2$-;
X = hydrogen, alkyl, cycloalkyl, aryl, alkylaryl or aralkyl containing from 1 to 20 carbon atoms, optionally contain ing one or more (e.g. 1 to 3) halogen atoms (e.g. Cl, Br or F) as substituents; and furthermore, when Z = >CO, X may also be -NHR or -Y-CONHR,
Y being a linear or branched alkylene group containing from 1 to 12 carbon atoms.

Preferred examples of the just mentioned generic groups are $C_{1-12}$alkyl (e.g. methyl, ethyl, n-propyl, i-propyl, butyl, pentyl, hexyl and octyl), $C_{4-8}$cycloalkyl (e.g. cyclopentyl, cyclohexyl and cyclooctyl), $C_{6-14}$aryl (e.g. phenyl and naphthyl), $C_{7-15}$alkylaryl (e.g. tolyl, xylyl and methylnaphthyl), $C_{7-15}$aralkyl (e.g. benzyl and phenethyl) as well as $C_{1-6}$alkylene (e.g. methylene, ethylene, propylene, butylene and hexylene).

Examples of corresponding amides are: N,N′-diphenylurea, N-phenyl formamide, N-phenyl acetamide, N-phenyl propionamide, N-phenyl benzamide, N-hydroxyphenyl-benzene sulphonamide, N-chlorophenyl-formamide, N-hydroxyphenyl-acetamide, N,N′-di(chlorophenyl)urea, N-phenyl-nicotinamide, N-fluorophenyl-acetamide, N-phenyl oxamide, N,N′-diphenylmalonamide, N,N′-diphenyl succinamide, N,N′-diphenylphthalimide, N,N′-diphenyl malonamide, N-methylphenyl-formamide, N,N′-diethylphenylurea.

The N-aryl-substituted polyglutarimides prepared from acrylic polymers by reaction with the compounds of formula (I) indicated hereinbefore, are particularly suitable for forming compatible mixtures with styrene copolymers of the SAN type (the latter term is to cover ABS copolymers (acrylonitrile/butadiene/styrene), AES copolymers (acrylonitrile/styrene/ethylene-propylene rubbers or ethylene-propylene-diene rubbers) and SAN copolymers (styrene/acrylonitrile). The polyglutarimide/styrene copolymer weight ratio ranges from 99/1 to 1/99, preferably from 90/10 to 10/90.

The N-aryl polyglutarimides having a Tg of at least 130 °C and preferably of at least 140 °C are particularly suitable, N-aryl polyglutarimides having Tg values of at least 160 °C, and in particular of at least 170 °C, being even more preferred.

Thus, object of the present invention are compositions comprising:

(a) from 1 to 99% by weight of at least one styrene copolymer selected from ABS, AES and SAN and

(b) from 99 to 1% by weight of a N-aryl (preferably N-phenyl) polyglutarimide prepared by imidization reaction of an acrylic polymer with a compound of general formula (I).

A further object of the present invention is represented by compatible compositions comprising from 1 to 99% by weight of at least one styrene copolymer selected from SAN, AES and ABS and from 99 to 1% by weight of a N-aryl polyglutarimide having a Tg value of at least 140 °C.

The term "acrylic polymers" as used herein designates homopolymers and copolymers of alkyl esters of acrylic or methacrylic acid, wherein the alkyl group preferably has 1 to 8 carbon atoms, the homopolymers and copolymers of acrylic acid and methacrylic acid, and the copolymers of said esters with said acids.

Examples of the above esters are: methyl methacrylate, ethyl methacrylate, isopropyl methacrylate, sec.-butyl methacrylate, tert.-butyl methacrylate and the corresponding ethyl, methyl, propyl, isopropyl, butyl acrylates, etc.

Said acrylic polymers may contain units derived from other copolymerizable mono- or poly-unsaturated monomers, such as styrene, α-methylstyrene, acrylonitrile, acrylamide, butadiene, etc.

Such polymers usually exhibit an inherent viscosity, determined in tetrahydrofuran (THF) at 30 °C, of from 0.05 to 7 dl/g, and preferably from 0.10 to 3 dl/g.

The N-aryl polyglutarimides to be used in the compositions according to the present invention can be prepared in accordance with known methods, by reaction between the components at 150-350 °C, in mass or in a solvent in, the presence or absence of catalysts. Useful methods of preparation are described, for

example, in EP-A-275,918, IT-A-22504 A/87, 22505 A/87 and 19531 A/88, and in US-A-2,146,209.

Component (a) of the compositions according to the present invention comprises styrene/acrylonitrile single-stage copolymers as well as multistage copolymers, the preparation of which comprises a styrene/acrylonitrile polymerization stage. The SAN copolymers preferably contain acryl amounts higher than 16% by weight and preferably from to 50% by weight of said monomer(s).

The ABS copolymers preferably contain from 90 to 75% by weight of SAN; the AES copolymers preferably contain from 80 to 60% by weight of SAN.

In the SAN copolymers, the acrylonitrile can be substituted completely or partially by methacrylonitrile.

The compositions of the present invention can be prepared by mixing the polyglutarimides with the styrene copolymer according to conventional methods. For example, one may prepare a solution at, e.g., 5% by weight, in total, of the two components in tetrahydrofuran and then precipitate them with methanol, at room temperature, in the form of an intimate mixture.

It is also possible to mix said components in a Brabender and/or in an extruder, at the melting point of the mixture (180-250 °C).

The N-aryl-substituted polyglutarimides utilizable according to the present invention preferably contain from about 0.5 to about 6.1% by weight of imidic nitrogen. The preferred N-aryl (phenyl)-substituted polyglutarimides are the ones having a Tg value of at least 130 °C.

Such polyglutarimides are not cross-linked, are soluble in dimethylformamide and in THF and can be modified by incorporation of additives such as pigments, fillers, stabilizers, lubricants.

The following examples are given to illustrate the present invention and are not to be considered to be a limitation thereof.

## EXAMPLE 1

### Preparation of a N-phenyl polyglutarimide using N,N′-diphenylurea.

16.5 g of polymethyl methacrylate with an inherent viscosity in THF at 30 °C of 0.34 dl/g and 35 g of N,N′-diphenylurea were introduced, under a nitrogen atmosphere, into a 150 ml reactor equipped with stirrer and discharge means for the volatile components.

The mixture was gradually heated to melting and then up to 250 °C and the volatile reaction products were removed by distillation.

The reaction was continued at 240 °C for about 4 hours, then vacuum was applied in the reactor for 15 minutes by means of a mechanical pump, the temperature was brought to 150 °C and the mixture was refluxed with nitrogen. The reaction product was dissolved in N,N-dimethylformamide and the imidized polymer subsequently was recovered by coagulation with methanol.

The resulting product was filtered, washed with ether and dried under vacuum.

It exhibited the following characteristics :

[$\eta$] in DMF at 30 °C = 0.13 dl/g
imidic nitrogen content = 6.1 % by weight
Tg = 247 °C

The glass transition temperature (Tg) was determined on the powdered product by means of a differential calorimeter as the temperature which corresponds to, the inversion point appearing on the thermogram when the thermal capacity of the material changes.

The temperature scanning rate was 20 °C/minute and the measurement was carried out after a first heating up to 200 °C and subsequent cooling.

## EXAMPLE 2

### Preparation of a N-phenyl polyglutarimide using N,N′-diphenylurea.

The procedure of example 1 was followed, using 25 g of the same polymer and 26.35 g of N,N′-diphenylurea and conducting the reaction for 3 hours at 230 °C.

The obtained polymer exhibited the following characteristics:

[$\eta$] in THF at 30 °C = 0.35 dl/g

imidic nitrogen content = 4.5 % by weight
Tg = 186.6 °C

EXAMPLE 3

Preparation of N-phenyl polyglutarimide using N-phenylformamide.

The procedure of example 1 was followed, using 25 g of the same polymethylmethacrylate and 15.12 g of N-phenylformamide and reacting the components for 2.5 hours at 250 °C. The obtained polymer exhibited the following characteristics:
[η] in THF at 30 °C - 0.32 dl/g
imidic nitrogen content = 3.24 % by weight
Tg = 170.4 °C

EXAMPLE 4

Preparation of N-phenyl polyglutarimide using N-phenylformamide.

The procedure of example 1 was followed, using 25 g of polymethylmethacrylate and 34.33 g of N-phenylformamide. The obtained product exhibited the following characteristics:
[η] in THF a 30 °C = 0.26 dl/g
imidic nitrogen content = 5.24 % by weight
Tg = 220 °C

EXAMPLE 5

Preparation of N-phenyl polyglutarimide using N-phenyl acetamide.

The procedure of example 1 was followed, starting from 25 g of the same polymethylmethacrylate and from 16.2 g of N- phenylacetamide and reacting the two components at 260 °C for 2 hours. The obtained polymer exhibited the following characteristics :
[η] in THF at 30 °C = 0.30 dl/g
imidic nitrogen content = 0.55 % by weight
Tg = 131 °C

EXAMPLE 6

Preparation of N-phenyl polyglutarimide using N-phenylacetamide.

The procedure of example 1 was followed, using 25 g of polymethyl methacrylate, 16.2 g of N-phenylacetamide and reacting the components for 5 hours at 270 °C. The obtained polymer exhibited the following characteristics:
[η] in THF at 30 °C = 0.20 dl/g
imidic nitrogen content = 2.28 % by weight
Tg = 143.5 °C

EXAMPLE 7 (comparative)

Preparation of N-phenyl polyglutarimide using aniline.

The procedure of example 1 was followed, using 25 g of the same polymethyl methacrylate and 23.2 g of aniline and reacting the components for 4 hours at 210 °C. The obtained product exhibited the following characteristics:
[η] in THF at 30 °C = 0.37 dl/g
imidic nitrogen content = 0.98 % by weight Tg = 147.6 °C

EXAMPLE 8 (comparative)

Preparation of N-phenyl polyglutarimide using aniline.

The procedure of example 7 was followed, using 35 g of polymethyl methacrylate and 16.6 g of aniline, and reacting the compounds for 3 hours at 220 °C.The obtained polymer exhibited the following characteristics :
[η] in THF at 30 °C = 0.36 dl/g
imidic nitrogen content = 0.89 % by weight
Tg = 143 °C

EXAMPLE 9 (comparative)

Preparation of N-phenyl polyglutarimide using aniline.

The procedure of example 8 was followed, conducting the reaction for 2 hours at 205 °C. The obtained polymer exhibited the following characteristics:
[η] in THF at 30 °C = 0.36 dl/g
imidic nitrogen content = 0.26 % by weight
Tg = 130.5 °C

EXAMPLE 10

By using the N-phenyl polyglutarimides prepared according to examples 1 to 9, mixtures with AES copolymer in different weight ratios were prepared.

The AES copolymer employed consisted of:
- 30% by weight of amorphous rubber ethylene/propylene/5- ethylidene-2-norbornene (Dutral®TER 046/E3) having the following characteristics:
. propylene content = 35 % by weight
. 5-ethylidene-2-norbornene content = 9 % by weight
. inherent viscosity in tetrahydronaphthaline at 135 °C = 1 .9 dl/g
- 70% by weight of SAN containing 24% by weight of acrylonitrile.

The Tg value of said AES copolymer was 110.5 °C.

The mixtures were prepared by dissolving the two components in tetrahydrofuran and by subsequent precipitation with methanol

The Tg values, in °C, of the obtained mixes are indicated in Table I.

From the data indicated in the table it is apparent that the use of N-phenyl polyglutarimides prepared front aniline, according to examples 7, 8 and 9, gave rise to mixtures with two different Tg values, and therefore to non-homogeneous compositions due to the immiscibility of the components.

TABLE I

| IMIDE/AES | EXAMPLES | | | | | | | | |
|---|---|---|---|---|---|---|---|---|---|
| % b.w. | 1 | 2 | 3 | 4 | 5 | 6 | 7 | 8 | 9 |
| | Tg °C | Tg °C | Tg °C | Tg °C | Tg °C | Tg °C | Tg °C | Tg °C | Tg °C |
| 0/100 | 110,5 | 110,5 | 110,5 | 110,5 | 110,5 | 110,5 | 110,5 | 110,5 | 110,5 |
| 20/80 | - | 118,6 | 122,4 | - | - | - | - | - | - |
| 40/60 | 153,4 | 131 | 129,6 | 148,6 | 114 | 126.1 | 112,7 -151 | 103 139 | 108 134,5 |
| 60/40 | 182,1 | 153,3 | 141,6 | 171,7 | 119,6 | 130.9 | -- | 112- 153,1 | |
| 80/20 | - | 180,9 | 149,2 | - | - | - | - | - | - |
| 100/0 | 247 | 186.6 | 170.4 | 215 | 131 | 143.5 | 147.6 | 143 | 130.5 |

EXAMPLE 11

By employing the N-phenyl polyglutarimides of examples 2, 3, 6 and 8 and following the procedure illustrated in example 10, mixtures with ABS copolymer in different weight ratios were prepared.

The ABS copolymer employed consisted of:

| | |
|---|---|
| - polybutadiene | 14 % by weight |
| - SAN copolymer (at 24% by weight of acrylonitrile) | 86 % by weight |

It exhibited the following characteristics:

[η] in THF at 30 °C = 0.57 dl/g

Tg = 107.6 °C

The Tg values determined on the mixtures thus obtained are reported in Table II.

TABLE II

| IMIDE/AES | EXAMPLES | | | |
|---|---|---|---|---|
| % b.w. | 2 | 3 | 6 | 8 |
| | Tg °C | Tg °C | Tg °C | Tg °C |
| 0/100 | 107,6 | 107.6 | 107.6 | 107.6 |
| 20/80 | - | 122,8 | - | - |
| 40/60 | 131,3 | 130,9 | 120,2 | 110,145 |
| 60/40 | 152,2 | 146,2 | 128,9 | - |
| 80/20 | - | 156,3 | - | - |
| 100/0 | 186,6 | 170.4 | 143,5 | 143 |

EXAMPLE 12

By using the N-phenyl polyglutarimides of examples 3, 4, 6 and 8 and following the procedure of

example 10, mixtures with SAN copolymers in different weight ratios were prepared.

The SAN copolymer had an acrylonitrile content of 24% by weight. Its characteristics were as follows:

[η] in THF at 30 °C = 0.8 dl/g

Tg = 109.2 °C

The Tg values exhibited by the mixtures thus obtained are reported in Table III.

TABLE III

| IMIDE/AES | EXAMPLES | | | |
|---|---|---|---|---|
| % b.w. | 3 | 4 | 6 | 8 |
| | Tg °C | Tg °C | Tg °C | Tg °C |
| 0/100 | 109,2 | 109,2 | 109,2 | 109,2 |
| 20/80 | 116,1 | - | - | - |
| 40/60 | 125,3 | 141,1 | 122.5 | 110,148 |
| 60/40 | 138,1 | 156,9 | 129,5 | - |
| 80/20 | 151,8 | - | - | - |
| 100/0 | 170,4 | 215 | 143.5 | - |

EXAMPLE 13

By using the N-phenyl polyglutarimide of example 4 and following the procedure of example 10 mixtures with SAN copolymers having an acrylonitrile content of 31% and 40% by weight, respectively, were prepared.

said copolymers exhibited a specific viscosity in dichloroethane at 25 °C and a concentration of 1 g/l, of 0.065 and 0.08, respectively.

The Tg values exhibited by the mixtures thus obtained are reported in Table IV.

TABLE IV

| ACRYLONITRILE IN SAN | EXAMPLES | | | |
|---|---|---|---|---|
| | 0/100 | 40/60 | 60/40 | 100/0 |
| | Tg °C | Tg °C | Tg °C | Tg °C |
| 31% | 108.5 | 136,4 | 160.1 | 215 |
| 40% | 111.8 | 133.1 | 162,5 | 215 |

**Claims**

1. Compositions comprising:

a) from 1 to 99% by weight of a styrene copolymer se-selected from ABS, AES and SAN;

b) from 99 to 1% by weight of a N-aryl polyglutarimide prepared by imidization of an acrylic polymer with a compound of the general formula:

X-Z-NHR

wherein:

R = an aryl radical of formula

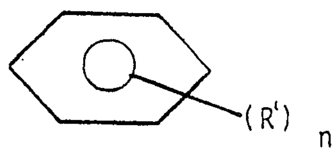

where R′ may be halogen, hydroxy, carboxy, or alkyl containing from 1 to 4 carbon atoms;

n = an integer from 0 to 3, extremes included;

Z = $\geq$ C=O, > $SO_2$ or $-C_6H_4-SO_2-$;

X = hydrogen or alkyl, cycloalkyl, aryl, aralkyl or alkyl aryl containing from 1 to 20 carbon atoms and optionally containing halogen atoms as substituents, and furthermore, when Z = $\geq$ C=O, X may also be a -NHR group or a -Y-CONHR group;with

Y being a linear or branched alkylene group containing from 1 to 12 carbon atoms.

2. Compositions according to claim 1, wherein the N-aryl polyglutarimide is a N-phenyl polyglutarimide.

3. Compositions according to anyone of claims 1 and 2, wherein the N-aryl polyglutarimide has an imidic nitrogen content of from about 0.5 to about 6.1% by weight.

4. Compositions according to any of the preceding claims, wherein the N-aryl polyglutarimide exhibits a Tg value of at least 130 °C.

5. Compositions according to claim 4, wherein the N′-aryl polyglutarimide exhibits a Tg value of at least 140 °C, preferably of at least 160 °C, and in particular of at least 170 °C.

6. Compositions according to anyone of claims 1 to 5, wherein the N-aryl polyglutarimide has been prepared by using an imidization agent selected from N,N′-diphenylurea, N-phenylformamide and N-phenylacetamide.

7. Compatible compositions comprising:

a) from 1 to 99% by weight of a styrene copolymer selected from ABS, AES and SAN;

b) from 99 to 1% by weight of an aryl polyglutarimide having a Tg of at least 140 °C, particularly at least 160 °C.

European Patent Office

# EUROPEAN SEARCH REPORT

Application Number

EP 90 10 2317

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 10, no. 148 (C-350)[2205], 29th May 1986; & JP-A-61 9459 (MITSUBISHI RAYON K.K.) 17-01-1986<br>* Abstract *<br>--- | 1-7 | C 08 L 33/24<br>C 08 L 25/02 //<br>(C 08 L 33/24<br>C 08 L 25:02 ) |
| A | CHEMICAL ABSTRACTS, vol. 107, no. 24, 14th December 1987, page 36, abstract no. 218596y, Columbus, Ohio, US; & JP-A-62 129 333 (ASAHI CHEMICAL INDUSTRY CO., LTD) 11-06-1987<br>* Abstract *<br>----- | 7 | |
| | | | TECHNICAL FIELDS SEARCHED (Int. Cl.5) |
| | | | C 08 L |

The present search report has been drawn up for all claims

| Place of search | Date of completion of the search | Examiner |
|---|---|---|
| THE HAGUE | 04-04-1990 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document